# EUROPEAN PATENT SPECIFICATION

(11) **EP 4 287 764 B1**
(45) Date of publication and mention of the grant of the patent: **02.07.2025**
(21) Application number: 23176304.6
(22) Date of filing: 31.05.2023
(51) Int. Cl.: H04W 36/00, H04W 88/08, H04W 88/12, H04W 92/12

(54) **METHODS FOR EFFECTIVE MANAGEMENT AND MAINTENANCE OF ACTIVE USER EQUIPMENT CONTEXT IN THE 5G-NODEB**
VERFAHREN ZUR EFFEKTIVEN VERWALTUNG UND WARTUNG VON AKTIVEM BENUTZERGERÄTEKONTEXT IN 5G-NODEB
MÉTHODES POUR GESTION ET MAINTENANCE EFFICACES DU CONTEXTE DE L'ÉQUIPEMENT DE L'UTILISATEUR ACTIF DANS LE 5G-NODEB

(30) Priority: 01.06.2022 IN 202221031514; 25.05.2023 US 202318323468
(43) Date of publication of application: 06.12.2023
(60) Divisional application: 24199140.5
(73) Proprietor: Mavenir Systems, Inc., Richardson, TX 75081 (US)
(72) Inventor: JENA, Hari Shankar, 560064 Bengaluru (IN); TELANG, Sachin Vitthal, 560066 Bengaluru (IN)
(74) Representative: Studio Torta S.p.A.

(56) References cited:
- WO-A1-2020/242987
- WO-A1-2022/046756
- US-A1- 2021 014 912
- ERICSSON ET AL: "RRC Re-establishment and inter-vendor CU operation", vol. RAN WG3, no. Online; 20210816 - 20210826, 5 August 2021 (2021-08-05), XP052032672, Retrieved from the Internet <URL:https://ftp.3gpp.org/tsg_ran/WG3_Iu/TSGR3_113-e/Docs/R3-213361.zip R3-213361 - RRC Re-establishment and inter-vendor CU operation.docx> [retrieved on 20210805]
- "3rd Generation Partnership Project; Technical Specification Group Radio Access Network; NG-RAN; E1 Application Protocol (E1AP) (Release 16)", 6 April 2022 (2022-04-06), XP052148070, Retrieved from the Internet <URL:https://ftp.3gpp.org/3guInternal/3GPP_ultimate_versions_to_be_transposed/sentToDpc/38463-g90.zip 38463-g90.doc> [retrieved on 20220406]

## Description

### BACKGROUND OF THE INVENTION

The present disclosure relates to Radio Access Network (RAN) for 5G-based mobile networks, and relates more particularly to identification and removal of stale users (e.g., user equipments (UEs)) from 5G NR base station systems (which are referred to as gNodeB or gNB).

The 5G next generation (NG) cellular technology is designed to provide extremely high-speed mobile broadband and reliable communication services at ultra-low latency levels. This enables the 5G technology to cater to newer market segments such as manufacturing, automotive, transportation & logistics, healthcare, agriculture, Internet of Things (IoT), etc., resulting in the exponential growth of the 5G mobile devices and User Equipments (UE) including Smartphones, laptops, loT devices, connected cars, smart meters, factory automation devices, etc.

Mobile devices, e.g., UEs, connect to the 5G cellular networks via the Radio Access Networks (RANs) for availing services such as voice, data, multimedia, etc. Effective management and maintenance of the UE contexts are essential and complex functions of the 5G RAN for delivering the higher quality of service (QoS) and quality of experience (QoE) expected of the 5G wireless networks.

UEs connect to the 5G wireless network via gNodeB, where the UE contexts are maintained and managed for a time duration when active user data traffic is ongoing. Once the user activity is over, such UEs are released by the gNodeB, and corresponding UE contexts removed from the system.

However, due to multitude of reasons described in detail below, situations occur when some of these UE contexts do not get removed from the gNodeB, and these UE contexts become stale UE contexts (or stale users), wherein no signaling or data transfer happens between gNodeB and actual UE, yet these remain active in the gNodeB system.

Creation, maintenance, and release of UE contexts i) involve a variety of procedures and ii) are functionally distributed across multiple components of the gNodeB. UE contexts need to be maintained in both gNB Centralized Unit (gNB-CU) and gNB Distributed Unit (gNB-DU) network functions of the gNodeB. Some of the reasons why stale UE contexts are created in the gNodeB system include:
1) Desynchronization between different components within the gNB-CU, desynchronization between the gNB-CU and the gNB-DU, Stream Control Transmission Protocol (SCTP) link breakdown between the gNB-CU and the gNB-DU.
2) Non-completion of 3rd Generation Partnership Project (3GPP) Procedures involving UE contexts, e.g., handover (HO), UE Release, F1 interface link down, etc.
Some specific examples include:
a) In 5G standalone (SA) deployments, stale users can get created in the following scenarios:
   i) If UE loses the connection with the RAN, after the UE Registration is completed but before PDU Session is established.
   ii) In case of XN handover and/or Next Generation Application Protocol (NGAP) handover, when the target gNodeB sends XN HO REQ ACK and/or NG HO REQ ACK to the source gNodeB, but the source gNodeB is not accessible or available for service.
b) In 5G non-standalone (NSA) deployments, stale users can get created in the following scenarios:
   i) If UE CONTEXT RELEASE is not received from peer 4G evolved NodeB (eNB).
   ii) When a 5G gNB sends the Secondary gNB (SGNB) Release Required message to a 4G eNB, but the corresponding response is not received from the 4G eNB.

Stale user contexts result in various problems affecting the normal functions of the gNodeB, including the following issues:
1) Admission Control Restriction: gNB-CU and gNB-DU network functions are often configured to cater to a fixed number of users (UEs) based on the system capacity and deployment model. Stale user contexts result in such user capacity thresholds to be reached (even in the absence of actual active users), thereby affecting the new user admission.
2) Admission Control Rejection: New user admission gets rejected if the new user(s) are allocated the same Cell Radio Network Temporary Identifier (C-RNTI) as that already assigned to any stale UE(s).
3) 5G system resource waste: Cell resources gets wasted, i.e., UL resources (Physical Resource Block (PRB) and Physical Uplink Control Channel (PUCCH)) and DL resources (PRB) are reserved for such stale users but are not actually used, which means these resources not available for other active UE contexts for use.
4) Interference and/or block error rate (BLER): Although there is no active signaling from the Stale UE, the gNodeB still monitors on the reserved UL and DL resources for user signaling data, which monitoring causes interference in other active users' signaling traffic.
5) User Context Management Synchronization problem at gNB-CU and gNB-DU: Restart of gNB-CU and gNB-DU network functions is required to clear off stale UEs from the gNodeB system, but such a restart affects even the actually active UEs (which are serviced by the gNodeB) getting released abnormally, thereby causing major service impact to the coverage area, which is undesirable.
6) Increased memory consumption occurs for gNB-CU/ gNB-DU network functions at the gNodeB.

3GPP specification defines certain procedures to detect user (UE) data inactivity and trigger release for such inactive UE contexts. These procedures are applicable only when the necessary Bearer Contexts are created for the user after the PDU session establishment procedure. However, such 3GPP-defined mechanism are not sufficient for maintenance of the UE contexts at gNB-CU or gNB-DU in cases when stale UEs are created before PDU Session establishment and bearer inactivity cannot be triggered at either gNB-CU or gNB-DU due to absence of any established user bearer.

In the absence of any 3GPP-specification-defined mechanism, it requires a brute-force mechanism, e.g., restart of gNB-CU and gNB-DU network functions, to clear off such stale UEs. However, as mentioned above, such brute-force mechanism also affects the active, in-service users, thereby causing major service impact to the coverage area served by the gNodeB and affecting the user QoS and QoE, all of which are quite undesirable.

Document by ERICSSON et al., "RRC Re-establishment and inter-vendor CU operation", 3GPP DRAFT; R3-213361, vol. RAN WG3, no. Online, 3 august 2021, discloses that if UE access the same gNB-DU, then other vendor CU will trigger UE Context Setup procedure towards the same gNB-DU.

US2021/014912 relates to a method and apparatus for identifying a user and generating and transmitting an identifier by a base station (BS) in a wireless communication system.

WO 2020/242987 A1 discloses that the UE performs mobility Registration Update procedures, performs periodic Registration Update procedures triggered by expiration of the periodic update timer (e.g., to notify the network that the UE is still active).

However, the above-mentioned issues are not solved.

Therefore, there is a need for an optimized mechanism to detect and deal with stale UE contexts present at gNB-CU and gNB-DU.

### SUMMARY OF THE INVENTION

The invention is set out in the appended set of claims.

The following are example embodiments of the present disclosure, that are useful to understand the claimed invention.

According to an example embodiment of the present disclosure, for the method in which stale user context detection and removal are implemented at the gNB-CU, the gNB runs a configurable periodic timer (e.g., default value = 30 mins) for initiating the stale UE detection procedure.

According to an example embodiment of the present disclosure, for the method in which stale user context detection and removal are implemented at the gNB-CU, as part of the detection procedure, the gNB configures, for every UE context stored in its database, a special Event A1 with the low *a1-Threshold =* -120 dBm, *reportInterval =* 512 ms, and *reportAmount =* 2. Since the configured *a1-Threshold* is very low, any active UE is bound to respond with an A1 Measurement report (MR) indicating the presence of a real UE. Those UE contexts for which no MR is reported for the configured duration of time will be classified as Stale UEs and deleted from the system.

According to an example embodiment of the present disclosure, for the method in which stale user context detection and removal are implemented at the gNB-CU, during initial User admission procedure, the gNB configures a special Event A1 with the low *a1-Threshold =* -120 dBm, *reportInterval =* 1 minute, and *reportAmount =* infinity. Those UE contexts for which no MR is reported for the configured duration of time will be classified as stale UEs and deleted from the system.

According to a second example embodiment of the present disclosure, a method is presented in which stale user context detection and removal are implemented at O-RAN Distributed Unit (gNB-DU) network function of gNodeB. According to the second example embodiment, stale UE contexts can be identified at the gNB-DU based on periodic Channel State Information (CSI) reports. In this example embodiment, during initial UE context setup, the gNB shall configure *csi-ReportConfigToAddModList* with *reportConfigType* set to *periodic* in the Radio Resource Control (RRC) Setup Request or RRC Reconfiguration message towards the UE, thereby causing active UE(s) to periodically report the CSI. In this example embodiment, the gNB-DU shall monitor the periodic CSI reports received from the UE. If consecutive "n" number (which can be specified) of periodic CSI reports are not received at the gNB-DU for any UE context, then such UE context is classified as inactive, and DU-initiated UE release procedure (as specified in 3GPP TS 38.473) between gNB-DU and gNB-CU is employed for deleting the stale UE context.

According to a third example embodiment of the present disclosure, which is not part of the present invention, a new audit mechanism is provided between gNB-CU and gNB-DU for active user context synchronization and maintenance. According to a first variant of the third example embodiment, new audit mechanism involves changes to F1AP protocol specification according to 3GPP TS 38.473. According to this variant of the third example embodiment, new interface management procedure and messages are introduced in "Section 9.2.1 Interface Management messages" for implementing the audit mechanism between gNB-CU and gNB-DU for active user context synchronization and maintenance. This procedure uses non-UE-associated signaling and can be triggered by both gNB-CU and gNB-DU network functions of the gNB to exchange the information about the UE Contexts maintained individually at both gNB-CU and gNB-DU.

According to a second variant of the third example embodiment of the present disclosure, which is not part of the present invention, a new audit mechanism is provided between gNB-CU and gNB-DU for active user context synchronization and maintenance, which new audit mechanism involves changes to E1AP protocol specification according to 3GPP TS 38.463. According to this variant of the third example embodiment, new interface management procedure and messages are introduced in "Section 9.2.1 Interface Management messages" for implementing the audit mechanism between gNB-CU Control Plane (gNB-CU-CP) and gNB-CU User Plane (gNB-CU-UP) functions for active user context synchronization and maintenance. This procedure uses non-UE-associated signaling and can be triggered by both gNB-CU and gNB-DU network functions of the gNB to exchange the information about the UE Contexts maintained individually at both gNB-CU-CP and gNB-CU-UP.

### BRIEF DESCRIPTION OF THE DRAWINGS

FIG. 1 is a diagram illustrating an example embodiment of an active UE Status Request procedure initiated from the gNB-CU.
FIG. 2 is a diagram illustrating an example embodiment of an active UE Status Request procedure initiated from the gNB-DU.
FIG. 3 is a diagram illustrating an example embodiment of an active UE Status Update procedure initiated from the gNB-CU.
FIG. 4 is a diagram illustrating an example embodiment of an active UE Status Update procedure initiated from the gNB-DU.
FIG. 5 is a diagram illustrating an example embodiment of an active UE Status Request procedure initiated from the gNB-CU-CP.
FIG. 6 is a diagram illustrating an example embodiment of an active UE Status Request procedure initiated from the gNB-CU-UP.
FIG. 7 is a diagram illustrating an example embodiment of an active UE Status Update procedure initiated from the gNB-CU-CP.
FIG. 8 is a diagram illustrating an example embodiment of an active UE Status Update procedure initiated from the gNB-CU-UP.

### DETAILED DESCRIPTION OF THE INVENTION

According to a first example embodiment of the present disclosure, a method is presented in which stale user context detection and removal are implemented at Open Radio Access Network (O-RAN) Centralized Unit (gNB-CU) network function of gNodeB. According to a first variant of the first example embodiment, the gNB runs a configurable periodic timer (e.g., default value = 30 mins) for initiating the stale UE detection procedure. As part of the stale UE detection procedure, the gNB configures, for every UE context stored in its database, a special Event A1 with the low *a1-Threshold* = -120 dBm, *reportInterval =* 512 ms, and *reportAmount =* 2. Since the configured *a1-Threshold* is very low, any active UE is bound to respond with an A1 Measurement report (MR) indicating the presence of a real UE. Those UE contexts for which no MR is reported for the configured duration of time will be classified as stale UEs and deleted from the system.

According to a second variant of the first example embodiment, stale UE detection mechanism can be based on a periodic Event A1 configured during initial User admission procedure. During the initial User admission procedure, the gNB configures a special Event A1 with the low *a1-Threshold =* -120 dBm, *reportInterval =* 1 minute, and *reportAmount =* infinity. All the UE contexts present at the gNB-CU network function can be maintained based on the periodic measurement reports (MRs) reported by active users. Those UE contexts for which no MR is reported for the configured duration of time will be classified as stale UEs and deleted from the system.

According to a second example embodiment of the present disclosure, a method is presented in which stale user context detection and removal are implemented at O-RAN gNB Distributed Unit (gNB-DU) network function of gNodeB. According to the second example embodiment, stale UE contexts can be identified at the gNB-DU based on periodic Channel State Information (CSI) reports. In this example embodiment, during initial UE context setup, the gNB shall configure csi-*ReportConfigToAddModList* with *reportConfigType* set to *periodic* in the Radio Resource Control (RRC) Setup Request or RRC Reconfiguration message towards the UE, thereby causing active UE(s) to periodically report the CSI. In this example embodiment, the gNB-DU shall monitor the periodic CSI reports received from the UE. If consecutive "n" number (e.g., "n" ≥ 2) of periodic CSI reports are not received at the gNB-DU for any UE context, then such UE context is classified as inactive, and DU-initiated UE release procedure (as specified in 3GPP TS 38.473) between gNB-DU and gNB-CU is employed for deleting the stale UE context.

According to a third example embodiment of the present disclosure, which is not part of the present invention, a new audit mechanism is provided between gNB-CU and gNB-DU for active user context synchronization and maintenance. According to a first variant of the third example embodiment, new audit mechanism involves changes to F1AP protocol specification according to 3GPP TS 38.473. According to this variant of the third example embodiment, new interface management procedure and messages are introduced in "Section 9.2.1 Interface Management messages" for implementing the audit mechanism between gNB-CU and gNB-DU for active user context synchronization and maintenance. This procedure uses non-UE-associated signaling and can be triggered by both gNB-CU and gNB-DU network functions of the gNB to exchange the information about the UE Contexts maintained individually at both gNB-CU and gNB-DU. According to this variant of the third example embodiment, periodic reporting can be configured for exchanging the UE context information periodically between gNB-CU and gNB-DU. Once the audit report is received, gNB-CU or gNB-DU can mark the unmatched contexts (UE context present only in either in gNB-CU or gNB-DU). When two or more consecutive reports specify the same inconsistency, UE context release procedure can be initiated for deleting the stale UE contexts.

In this section, active UE status request procedure will be discussed in connection with the first variant of the third example embodiment. The purpose of the Active UE Status Request procedure is to audit the active user context information stored at gNB-CU and gNB-DU. Active user context information exchanged between gNB-CU and gNB-DU is used to detect stale UE contexts and take suitable actions to remove such stale UE contexts. The active UE status request procedure i) does not affect the application-level configuration, and ii) uses non-UE associated signaling.

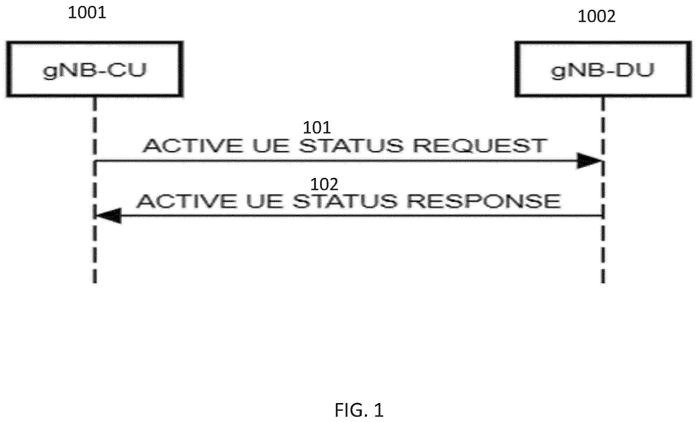

As shown in FIG. 1, which is a diagram illustrating an example embodiment of an active UE Status Request procedure initiated from the gNB-CU (and successfully completed), gNB-CU 1001 initiates the UE Context Audit procedure by sending the ACTIVE UE STATUS REQUEST message 101 to gNB-DU 1002 to request reporting of the UE Contexts maintained at gNB-DU 1002. Reporting Periodicity IE can be present in the ACTIVE UE STATUS REQUEST message 101 to indicate the periodicity for the reporting of periodic UE Context audit report. In the case the Reporting Periodicity IE is absent, the gNB-DU 1002 shall report once. The gNB-DU 1002 shall include each Active UE association present in the gNB-DU 1002 in the Active UE Status Response message 102 sent to the gNB-CU 1001, which Active UE Status Response message 102 contains, e.g., DU F1 Application Protocol (F1AP) UE Identifier (ID), CU F1AP UE ID, and/or (optionally) Cell Radio Network Temporary Identifier (C-RNTI).

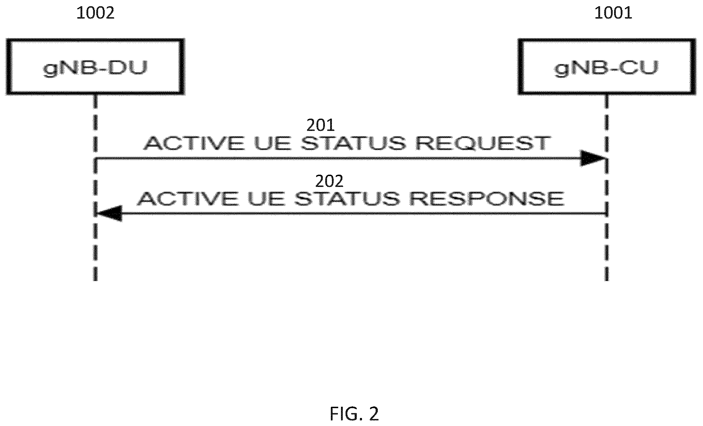

As shown in FIG. 2, which is a diagram illustrating an example embodiment of an active UE Status Request procedure initiated from the gNB-DU (and successfully completed), gNB-DU 1002 initiates the UE Context Audit procedure by sending the ACTIVE UE STATUS REQUEST message 201 to gNB-CU 1001 to request reporting of the UE Contexts maintained at GNB-CU 1001. Reporting Periodicity IE can be present in the ACTIVE UE STATUS REQUEST message 201 to indicate the periodicity for the reporting of periodic UE Context audit report. In the case the Reporting Periodicity IE is absent, the gNB-CU 1001 shall report once. The gNB-CU 1001 shall include each Active UE association present in the gNB-CU 1001 in the Active UE Status Response message 202 sent to the gNB-DU 1002, which Active UE Status Response message 202 contains, e.g., DU F1AP UE ID, CU F1AP UE ID, and/or (optionally) C-RNTI.

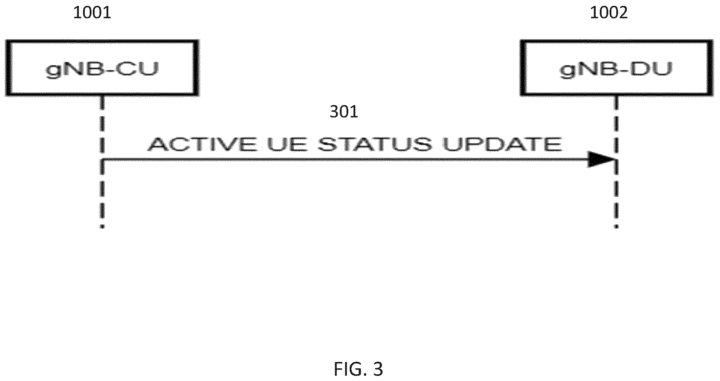

In this section, active UE status update procedure will be discussed in connection with the first variant of the third example embodiment. The purpose of the Active UE Status Update procedure is to periodically update the active user context information stored at gNB-CU and gNB-DU. This procedure i) does not affect the application-level configuration, and ii) uses non-UE associated signaling. FIG. 3 is a diagram illustrating an example embodiment of an active UE Status Update procedure initiated from the gNB-CU (and successfully completed). In the case the Reporting Periodicity IE in the ACTIVE UE STATUS REQUEST is present, then gNB-CU 1001 shall periodically send the ACTIVE UE STATUS UPDATE message 301 to gNB-DU 1002 to report the list of UE contexts present at GNB-CU 1001. The following information is provided for each UE in the list of UE contexts: DU F1AP UE ID, CU F1AP UE ID, and/or (optionally) C-RNTI.

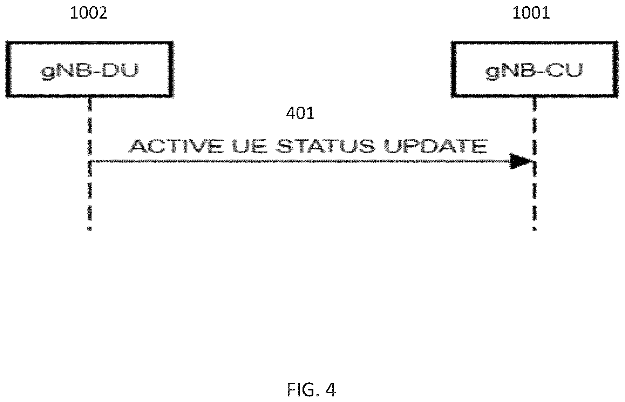

FIG. 4 is a diagram illustrating an example embodiment of an active UE Status Update procedure initiated from the gNB-DU (and successfully completed). In the case the Reporting Periodicity IE in the ACTIVE UE STATUS REQUEST is present, then gNB-DU 1002 shall periodically send the ACTIVE UE STATUS UPDATE message 401 to gNB-CU 1001 to report the list of UE contexts present at GNB-DU 1002. The following information is provided for each UE in the list of UE contexts: DU F1AP UE ID, CU F1AP UE ID, and/or (optionally) C-RNTI.

According to an example embodiment of the present disclosure, in connection with the first variant of the third example embodiment, additional modifications are proposed in the following existing messages to indicate a new UE release cause, "UE Context Mismatch": i) UE CONTEXT RELEASE REQUEST (gNB-DU-initiated Release procedure); and ii) UE CONTEXT RELEASE COMMAND (gNB-CU-initiated Release procedure).

According to a second variant of the third example embodiment of the present disclosure, which is not part of the present invention, a new audit mechanism is provided between gNB-CU and gNB-DU for active user context synchronization and maintenance, which new audit mechanism involves changes to E1AP protocol specification according to 3GPP TS 38.463. According to this variant of the third example embodiment, new interface management procedure and messages are introduced in "Section 9.2.1 Interface Management messages" for implementing the audit mechanism between gNB-CU Control Plane (gNB-CU-CP) and gNB-CU User Plane (gNB-CU-UP) functions for active user context synchronization and maintenance. This procedure uses non-UE-associated signaling and can be triggered by both gNB-CU and gNB-DU network functions of the gNB to exchange the information about the UE Contexts maintained individually at both gNB-CU-CP and gNB-CU-UP. In this variant of the third example embodiment, periodic reporting can be configured for exchanging the UE context information periodically between both gNB-CU-CP and gNB-CU-UP. Once the audit report is received, gNB-CU-CP or gNB-CU-UP can mark the unmatched contexts (UE context present only in either in gNB-CU-CP or gNB-CU-UP). When two or more consecutive reports specify the same inconsistency, UE context release procedure can be initiated for deleting the stale UE contexts.

In this section, active UE status request procedure will be discussed in connection with the second variant of the third example embodiment. The purpose of the Active UE Status Request procedure is to audit the active user context information stored at gNB-CU-CP and gNB-CU-UP. Active user context information exchanged between gNB-CU-CP and gNB-CU-UP is used to detect stale UE contexts and take suitable actions to remove such stale UE contexts. The active UE status request procedure i) does not affect the application-level configuration, and ii) uses non-UE associated signaling.

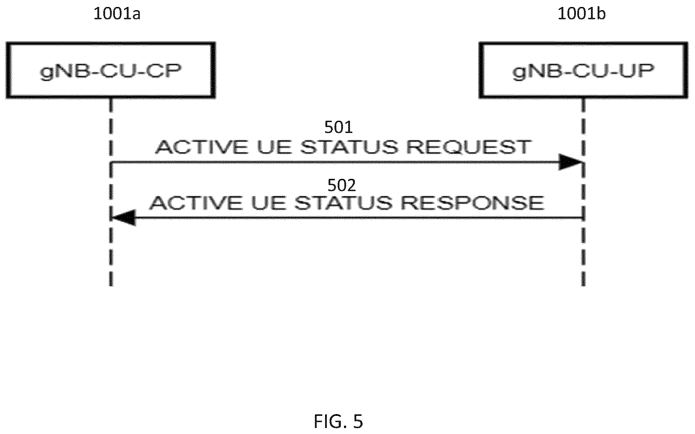

As shown in FIG. 5, which is a diagram illustrating an example embodiment of an active UE Status Request procedure initiated from the gNB-CU-CP (and successfully completed), gNB-CU-CP 1001a initiates the UE Context Audit procedure by sending the ACTIVE UE STATUS REQUEST message 501 to gNB-CU-UP 1001b to request reporting of the UE Contexts maintained at GNB-CU-UP 1001b. Reporting Periodicity IE can be present in the ACTIVE UE STATUS REQUEST message 501 to indicate the periodicity for the reporting of periodic UE Context audit report. In the case the Reporting Periodicity IE is absent, the gNB-CU-UP 1001b shall report once. The gNB-CU-UP 1001b shall include each Active UE association present in the gNB-CU-UP 1001b in the Active UE Status Response message 502 sent to the gNB-CU-CP 1001a, which Active UE Status Response message 502 contains, e.g., gNB-CU-CP UE E1 Application Protocol (E1AP) Identifier (ID), and gNB-CU-UP UE E1AP ID.

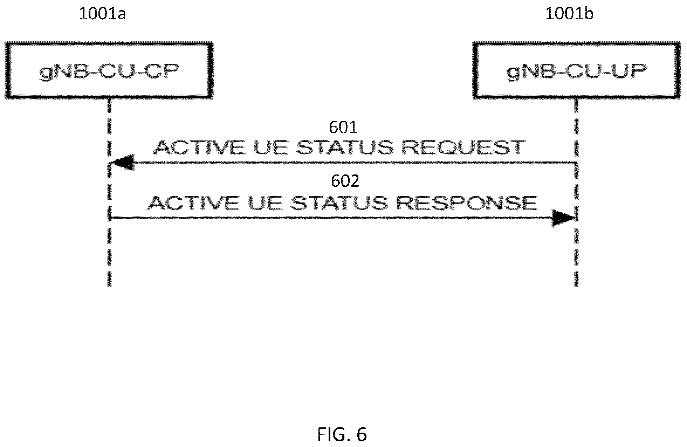

As shown in FIG. 6, which is a diagram illustrating an example embodiment of an active UE Status Request procedure initiated from the gNB-CU-UP 1001b (and successfully completed), gNB-CU-UP 1001b initiates the UE Context Audit procedure by sending the ACTIVE UE STATUS REQUEST message 601 to gNB-CU-CP 1001a to request reporting of the UE Contexts maintained at GNB-CU-CP 1001a. Reporting Periodicity IE can be present in the ACTIVE UE STATUS REQUEST message 601 to indicate the periodicity for the reporting of periodic UE Context audit report. In the case the Reporting Periodicity IE is absent, the gNB-CU-CP 1001a shall report once. The gNB-CU-CP 1001a shall include each Active UE association present in the gNB-CU-CP 1001a in the Active UE Status Response message 602 sent to the gNB-CU-UP 1001b, which Active UE Status Response message 602 contains, e.g., gNB-CU-CP UE E1AP ID, and gNB-CU-UP UE E1AP ID.

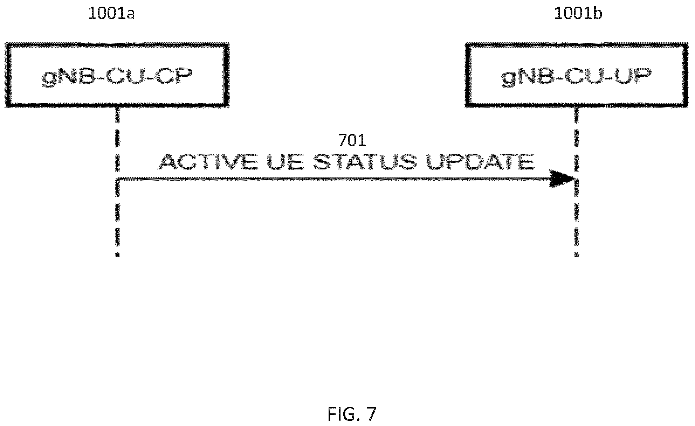

In this section, active UE status update procedure will be discussed in connection with the second variant of the third example embodiment. The purpose of the Active UE Status Update procedure is to periodically update the active user context information stored at gNB-CU-CP and gNB-CU-UP. This procedure i) does not affect the application-level configuration, and ii) uses non-UE associated signaling. FIG. 7 is a diagram illustrating an example embodiment of an active UE Status Update procedure initiated from the gNB-CU-CP 1001a (and successfully completed). In the case the Reporting Periodicity IE in the ACTIVE UE STATUS REQUEST is present, then gNB-CU-CP 1001a shall periodically send the ACTIVE UE STATUS UPDATE message 701 to gNB-CU-UP 1001b to report the list of UE contexts present at gNB-CU-CP 1001a. The following information is provided for each UE in the list of UE contexts: gNB-CU-CP UE E1AP ID, and gNB-CU-UP UE E1AP ID.

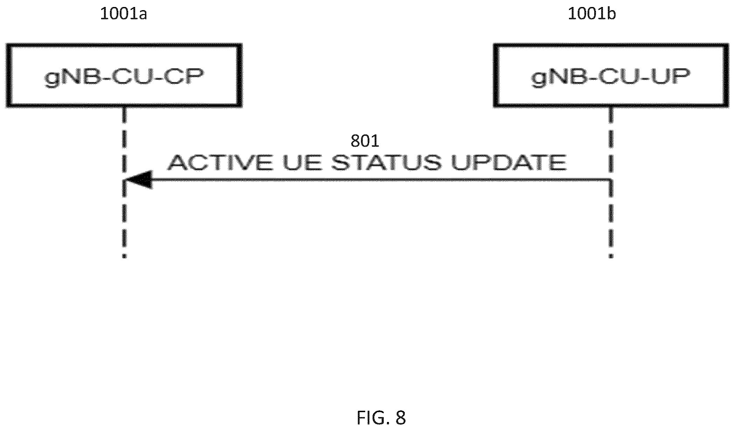

FIG. 8 is a diagram illustrating an example embodiment of an active UE Status Update procedure initiated from the gNB-CU-UP (and successfully completed). In the case the Reporting Periodicity IE in the ACTIVE UE STATUS REQUEST is present, then gNB-CU-UP 1001b shall periodically send the ACTIVE UE STATUS UPDATE message 801 to gNB-CU-CP 1001a to report the list of UE contexts present at GNB-CU-UP 1001b. The following information is provided for each UE in the list of UE contexts: gNB-CU-CP UE E1AP ID, and gNB-CU-UP UE E1AP ID.

Although the example embodiments of the methods for UE context management have been described in the present disclosure in the context of 5G gNodeB system, the present disclosure is also applicable to 4G LTE eNodeB system. As in the first example embodiment of the method for stale UE detection for 5G gNB system, a similar Stale UE detection mechanism can be implemented for 4G LTE eNodeB system using a Periodic Keep Alive Check mechanism based on Event A1 configuration and reporting between the 4G eNodeB and UE. In addition, as in the third example embodiment of the method, which is not part of the present invention, in which an audit mechanism is provided for 5G gNB system, a similar audit mechanism can be implement for 4G LTE eNodeB system for active user context synchronization and maintenance between 4G eNB-CU and 4G eNB-DU.

For implementing the example embodiments for 4G LTE eNodeB system, changes are proposed in 3GPP TS 37.473 W1AP Interface specification for the addition of the following new Interface Management procedure and messages for implementing the Audit mechanism between eNB-CU and eNB-DU functions for active user context synchronization and maintenance:
1) Active UE Status Request Procedure Initiated from the eNB-CU;
2) Active UE Status Request Procedure Initiated from the eNB-DU;
3) Active UE Status Update Procedure Initiated from the eNB-CU;
4) Active UE Status Update Procedure Initiated from the eNB-DU.

## Claims

1. A method for stale user equipment, UE, context detection and removal in Open Radio Access Network, O-RAN, the method comprising:
using one of O-RAN gNB Centralized Unit, gNB-CU, or O-RAN gNB Distributed Unit, gNB-DU, to implement a reporting requirement for receiving from an active user equipment, UE, information indicating the presence of the active UE, and
deleting by the one of the gNB-CU or the gNB-DU at least one UE context for which no information indicating the presence of the active UE is received.

2. The method according to claim 1, wherein the gNB-CU implements the reporting requirement, and wherein the reporting requirement is configured as a periodic timer with a specified reporting interval for transmitting measurement reports from the UE.

3. The method according to claim 2, wherein:
the gNB-CU configures, for every stored UE context, a special event A1 with the following reporting requirements: A1 Threshold = -120 dBm; report interval = 512 ms; and report amount = 2; and
at least one stored UE context for which no measurement report is received within a specified time period is deleted.

4. The method according to claim 3, wherein:
the gNB-CU configures, for every stored UE context, a special event A1 with the following reporting requirements: A1 Threshold = -120 dBm; report interval = 1 minute; and report amount = infinity; and
at least one stored UE context for which no measurement report is received within a specified time period is deleted.

5. The method according to claim 2, wherein the gNB-DU implements the reporting requirement, and wherein the reporting requirement is configured as periodic transmission of Channel State Information, CSI, reports from the UE.

6. The method according to claim 5, wherein:
the reporting requirement is specified by configuring a CSI reporting configuration parameter *csi-ReportConfigToAddModList,* and reporting configuration type block *reportConfigType* in the parameter *csi-ReportConfigToAddModList* is set to *periodic.*

7. The method according to claim 6, wherein the reporting configuration type block *reportConfigType* in the parameter *csi-ReportConfigToAddModList* is set to *periodic* in one of Radio Resource Control, RRC, Setup Request or RRC Reconfiguration message sent to the UE.

8. The method according to claim 6, wherein:
in the case consecutive n number of periodic CSI reports are not received at the gNB-DU for a UE context, n ≥ 2, the UE context is deleted.

## Patentansprüche

1. Verfahren zur Erkennung und Beseitigung von abgelaufenem Benutzergerät(UE)-Kontext im offenen Funkzugangsnetz (O-RAN), wobei das Verfahren umfasst:
Verwenden von einer aus einer O-RAN-gNB-zentralisierten Einheit (Centralized Unit) (gNB-CU) oder einer O-RAN-gNB-verteilten Einheit (Distributed Unit) (gNB-DU) zum Implementieren einer Berichtsanforderung für das Empfangen, von einem aktiven Benutzergerät (UE), von Informationen, die das Vorhandensein des aktiven Benutzergeräts (UE) anzeigen, und
Entfernen, durch die eine aus der gNB-CU oder der gNB-DU, mindestens eines UE-Kontextes, für den keine Information empfangen wird, die auf das Vorhandensein des aktiven UE hinweist.

2. Verfahren nach Anspruch 1, wobei die gNB-CU die Berichtsanforderung implementiert und wobei die Berichtsanforderung als periodischer Zeitgeber mit einem festgelegten Berichtsintervall zum Übertragen von Messberichten von dem UE konfiguriert ist.

3. Verfahren nach Anspruch 2, wobei:
die gNB-CU für jeden gespeicherten UE-Kontext ein spezielles Ereignis A1 mit den folgenden Berichtsanforderungen konfiguriert: A1-Schwellenwert = -120 dBm, Berichtsintervall = 512 ms und Berichtsmenge = 2, und
mindestens ein gespeicherter UE-Kontext, für den kein Messbericht innerhalb eines festgelegten Zeitraums empfangen wird, entfernt wird.

4. Verfahren nach Anspruch 3, wobei:
die gNB-CU für jeden gespeicherten UE-Kontext ein spezielles Ereignis A1 mit den folgenden Berichtsanforderungen konfiguriert: A1-Schwellenwert = -120 dBm, Berichtsintervall = 1 Minute und Berichtsmenge = unendlich, und
mindestens ein gespeicherter UE-Kontext, für den kein Messbericht innerhalb eines festgelegten Zeitraums empfangen wird, entfernt wird.

5. Verfahren nach Anspruch 2, wobei die gNB-DU die Berichtsanforderung implementiert und wobei die Berichtsanforderung als periodische Übertragung von Kanalstatusinformation(Channel State Information, CSI)-Berichten vom UE konfiguriert ist.

6. Verfahren nach Anspruch 5, wobei:
die Berichtsanforderung durch Konfigurieren eines CSI-Berichtkonfigurationsparameters *csi-ReportConfigToAddModList* spezifiziert wird und der Berichtskonfigurationstyp-Block (Reporting Configuration Type Block) *reportConfigType* im Parameter *csi-ReportConfigToAddModList* auf *periodisch* gesetzt wird.

7. Verfahren nach Anspruch 6, wobei der Berichtskonfigurationstyp-Block *reportConfigType* im Parameter *csi-ReportConfigToAddModList* in einer aus einer Radio Resource Control (RRC)-Setup-Anfrage- oder einer RRC-Rekonfigurations-Nachricht, die an das UE gesendet wird, auf *periodisch* gesetzt wird.

8. Verfahren nach Anspruch 6, wobei
falls eine aufeinanderfolgende Anzahl n periodischer CSI-Berichte an der gNB-DU für einen UE-Kontext nicht empfangen wird, n ≥ 2, der UE-Kontext entfernt wird.

## Revendications

1. Procédé de détection et de suppression du contexte d'équipement utilisateur, UE, périmé dans un réseau d'accès radio ouvert, O-RAN, le procédé comprenant :
l'utilisation d'une unité centralisée gNB d'un O-RAN, gNB-CU, ou d'une unité distribuée gNB d'un O-RAN, gNB-DU, pour mettre en œuvre une exigence de rapport pour recevoir d'un équipement utilisateur, UE, actif des renseignements indiquant la présence de l'UE actif, et
la suppression par l'une de la gNB-CU ou de la gNB-DU d'au moins un contexte UE pour lequel aucun renseignement indiquant la présence de l'UE actif n'est reçu.

2. Procédé selon la revendication 1, dans lequel la gNB-CU met en œuvre l'exigence de rapport et dans lequel l'exigence de rapport est configurée comme une minuterie périodique avec un intervalle de rapport donné pour transmettre des rapports de mesure de l'UE.

3. Procédé selon la revendication 2, dans lequel :
la gNB-CU configure, pour chaque contexte d'UE stocké, un événement spécial A1 avec les exigences de rapport suivantes : seuil A1 = -120 dBm ; intervalle de rapport = 512 ms ; et nombre de rapports = 2 ;
au moins un contexte d'UE stocké pour lequel aucun rapport de mesure n'est reçu dans un délai donné est supprimé.

4. Procédé selon la revendication 3, dans lequel :
la gNB-CU configure, pour chaque contexte d'UE stocké, un événement spécial Al avec les exigences de rapport suivantes : seuil A1 = -120 dBm ; intervalle de rapport = 1 minute ; et nombre de rapports = infini ; et
au moins un contexte d'UE stocké pour lequel aucun rapport de mesure n'est reçu dans un délai donné est supprimé.

5. Procédé selon la revendication 2, dans lequel la gNB-DU met en œuvre l'exigence de rapport et
dans lequel l'exigence de rapport est configurée comme une transmission périodique de renseignements sur l'état du canal, CSI, de l'UE.

6. Procédé selon la revendication 5, dans lequel :
l'exigence de rapport est précisée par la configuration d'un paramètre de configuration de rapport CSI *csi-ReportConfigToAddModList,* et le bloc de type de configuration de rapport *reportConfigType* dans le paramètre *csi-ReportConfigToAddModList* est défini à *periodic.*

7. Procédé selon la revendication 6, dans lequel le bloc de type de configuration de rapport *reportConfigType* dans le paramètre *csi-ReportConfigToAddModList* est réglé sur *periodic* dans l'un d'une demande de configuration du contrôle des ressources radio, RRC, ou d'un message de reconfiguration du RRC envoyé à l'UE.

8. Procédé selon la revendication 6, dans lequel le cas où un nombre consécutif *n* de rapports CSI périodiques n'est pas reçu au niveau de la gNB-DU pour un contexte UE, n ≥ 2, le contexte UE est supprimé.
